# EUROPEAN PATENT APPLICATION

(11) **EP 4 755 259 A1**
(43) Date of publication of application: **10.06.2026**
(21) Application number: 25220510.9
(22) Date of filing: 03.12.2025
(51) Int. Cl.: A47B 47/00, A47B 47/02, A47B 96/02, H01M 50/209

(54) **A FLAT-PACK BATTERY CABINET**

(30) Priority: 04.12.2024 IN 202421095683; 02.12.2025 US 202519406135
(71) Applicant: Vertiv Corporation, Westerville, OH 43082 (US)
(72) Inventor: SAM, Yahya, Westerville, 43082 (US); CHOBHE, Shrikant, Westerville, 43082 (US)
(74) Representative: Ambroz, Simon

(57) **Abstract**

A flat-pack battery cabinet is disclosed. The flat-pack battery cabinet (100) comprises a plurality of frames connected to each other by a plurality of vertical members (121). Each frame of the battery cabinet comprises a plurality of side brackets (105), a plurality of slats (110), a plurality of support brackets (115) and a plurality of lock brackets (120). The side brackets (105) comprises holes, grooves, and slits to attach to support brackets using fasteners to form shelf frames. The slats (110) fit into the slits of the side brackets. The lock brackets (120) receive the vertical members to lock the cabinet structure during assembly. The support brackets are designed to allow objects, such as batteries, to be mounted on the assembled shelves. The cabinet structure of the present disclosure is a flat-pack configuration that enables easy mounting, assembly and shipping.

## Description

### FIELD OF INVENTION

The present disclosure generally relates to the field of battery cabinets. More particularly, the present disclosure provides a flat-pack battery cabinet to facilitate quick mounting and assembly process.

### BACKGROUND OF THE INVENTION

The subject matter discussed in the background section should not be assumed to be prior art merely as a result of its mention in the background section. Similarly, a problem mentioned in the background section or associated with the subject matter of the background section should not be assumed to have been previously recognized in the prior art. The subject matter in the background section merely represents different approaches, which in and of themselves may also correspond to implementations of the claimed technology.

Conventional assembling processes of battery cabinets or DC system cabinets provided with batteries are notably time-consuming, often requiring between 90 to 120 minutes per cabinet. This prolonged assembly duration contributes to increased production costs and inefficiencies, negatively impacting both productivity and customer satisfaction. Moreover, traditional battery cabinets generally necessitate extensive packaging due to their size and structure, leading to logistical challenges, increased transportation costs, and a larger environmental footprint.

Therefore, there exists a need in the art for providing battery cabinets that requires relatively reduced number of materials and fastening elements thereby requiring reduced assembly time and quick packaging. There is also a need for providing a battery cabinet which optimizes logistics and minimizes environmental impact, while preserving product quality and structural integrity. There is yet another need to provide an environment- friendly and customizable configuration for battery cabinets that not only offers flexibility and modularity but allows customers to adjust the height and customize the cabinet according to their requirements, thus ensuring a user-friendly experience during assembling process.

### SUMMARY OF THE INVENTION

The summary is provided to introduce aspects related to providing a flat-pack battery cabinet for easy mounting and assembly. This summary is not intended to identify essential features of the claimed subject matter nor is it intended for use in determining or limiting the scope of the claimed subject matter.

In an example, the present disclosure provides a flat-pack battery cabinet configuration that enables quick mounting and assembly. The flat-pack battery cabinet comprises a plurality of frames connected to each other by a plurality of vertical members, wherein each frame of the plurality of frames comprises a plurality of side brackets, each side bracket having a rectangular body with a pair of flanges extending from opposite longitudinal edges of the body, the body further defining a plurality of holes and grooves configured therein, and a plurality of slits configured in the flanges. Each frame of the flat-pack battery cabinet further comprises a plurality of slats connected to a pair of opposing side brackets, each slat comprising a U-shaped rectangular body having a pair of arms extending from lateral edges and overhangs extending from longitudinal edges, thereby defining a gap between edges of the overhangs and edges of the arms, the slat further defining a plurality of notches and apertures in the arms, wherein the apertures are complementary to the holes on the side brackets. Each frame of the flat-pack battery cabinet further comprises a plurality of support brackets, each support bracket defined by a plate with a pair of extensions extending from opposite operative edges, each extension comprising fastening holes complementary to the holes of the side brackets. Each frame of the flat-pack cabinet further comprises a plurality of lock brackets configured in a U-shaped configuration and attachable to the side brackets at operative corners to form the frame, wherein each lock bracket is configured to receive the vertical members to provide locking during assembly of the flat-pack cabinet.

In an example, the side brackets of the flat-pack cabinet are configured to be attached to each other with the support brackets by fasteners received in the holes and the fastening holes, forming the frame of a shelf.

In an example, the slats are mounted on a pair of diagonally opposite side brackets such that the arms of each slat are received in the slits of the side brackets, and the overhangs rest against the edges of the side brackets.

In an example, the slats are secured to the side brackets with fasteners received in the apertures and corresponding holes.

In an example, the flat-pack cabinet comprises a plurality of frames, each configured to form a shelf, wherein the plurality of frames is connected to each other by the vertical members to define the cabinet structure.

In an example, the slits in the flanges of the side brackets are configured to receive the arms of the slats for secure placement of the slats within the frame.

In an example, the flat-pack cabinet is assembled by aligning and interlocking the side brackets, support brackets, and lock brackets to form a modular and detachable frame of the cabinet.

Other aspects and advantages of the invention will become apparent from the following description, taken in conjunction with the accompanying drawings, illustrating by way of example the principles of the invention.

### BRIEF DESCRIPTION OF THE DRAWINGS

The accompanying figures of the drawing, which are included to provide a further understanding of general aspects of the system/method, are incorporated in and constitute a part of this specification. These illustrative aspects of the system/method/assembly, and together with the detailed description, explain the principles of the system. No attempt is made to show structural details in more detail than is necessary for a fundamental understanding of the system and various ways in which it is practiced. The following figures of the drawing include:
**Figure 1A** **and** **Figure 1B** illustrate isometric views of a first example of a flat-pack battery cabinet in accordance with the example of the present disclosure;
**Figure 2** illustrates an isometric view of a side bracket of the flat-pack battery cabinet of Figure 1A in accordance with the example of the present disclosure;
**Figure 3** illustrates an isometric view of a slat of the flat-pack battery cabinet of Figure 1A in accordance with the example of the present disclosure;
**Figure 4A** illustrates an isometric view of a lock bracket of the flat-pack battery cabinet of Figure 1A in accordance with the example of the present disclosure;
**Figure 4B** illustrates an isometric view of the lock bracket of Figure 4A, in its unformed configuration in accordance with the example of the present disclosure;
**Figure 5** illustrates an isometric view of a support bracket of the cabinet of Figure 1A in accordance with the example of the present disclosure;
**Figure 6** illustrates an isometric view of a fully assembled shelf of the flat-pack battery cabinet of Figure 1A in accordance with the example of the present disclosure;
**Figure 7A** **and** **Figure 7B** illustrate isometric views of a second example of the flat-pack battery cabinet of the present disclosure in accordance with the example of the present disclosure; and
**Figure 8A** **and** **Figure 8B** illustrate isometric views of a third example of the flat-pack battery cabinet in accordance with the example of the present disclosure.

If only the first numerical reference label is used in the specification, the description is applicable to any one of the similar components and/or features having the same first numerical reference label irrespective of the suffix.

### DESCRIPTION OF THE INVENTION

The detailed description set forth below in connection with the appended drawings is intended as a description of various examples of the present disclosure and is not intended to represent the only examples in which the present disclosure may be practiced. Each example described in this disclosure is provided merely as an example or illustration of the present disclosure, and should not necessarily be construed as preferred or advantageous over other examples. The detailed description includes specific details for the purpose of providing a thorough understanding of the present disclosure. However, it will be apparent to those skilled in the art that the present disclosure may be practiced without these specific details.

Approximating language, as used herein throughout the specification and claims, may be applied to modify any quantitative representation that could permissibly vary without resulting in a change in the basic function to which it is related. Accordingly, a value modified by a term or terms, such as "less than," "approximately" etc. is not limited to the precise value specified. In some instances, the approximating language may correspond to the precision of an instrument for measuring the value.

The phrases "in one example," "according to one example," "in some examples," and the like generally mean that the particular feature, structure, or characteristic following the phrase may be included in at least one example of the present disclosure, and may be included in more than one example of the present disclosure (importantly, such phrases do not necessarily refer to the same example).

The word "example/embodiment" or "exemplary" is used herein to mean "serving as an example, instance, or illustration." Any implementation described herein as "exemplary" is not necessarily to be construed as preferred or advantageous over other implementations.

One of the major challenges in conventional assembling processes of battery cabinets or DC system cabinets equipped with batteries is that the assembling is a labor-intensive and time-consuming process. This consequently increases production costs and reduces operational efficiency, thereby affecting productivity and customer satisfaction. Additionally, traditional battery cabinets often require bulky packaging due to their size and design, resulting in logistical difficulties, higher transportation expenses, and an increased environmental impact.

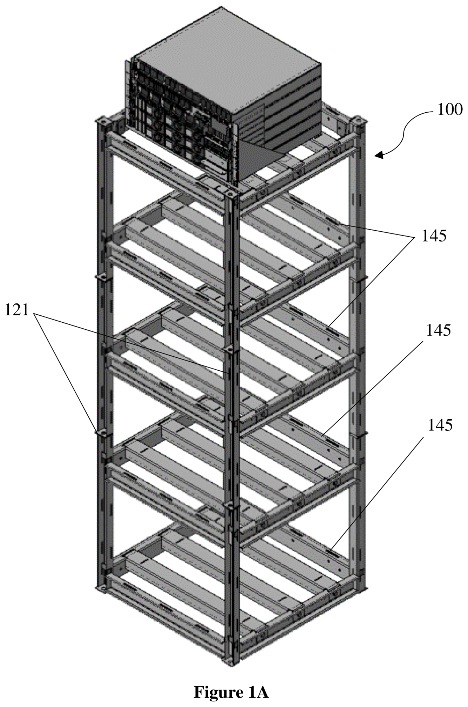

The flat-pack battery cabinet of the present disclosure addresses these limitations by providing a flexible and customizable configuration that minimizes the assembly time and provides individual components in smaller boxes, streamlining logistics and reducing environmental impact. The configuration of the battery cabinet of the present disclosure will be described in detail with reference to Figure 1A through Figure 8B. The examples do not limit the scope and ambit of the present disclosure.

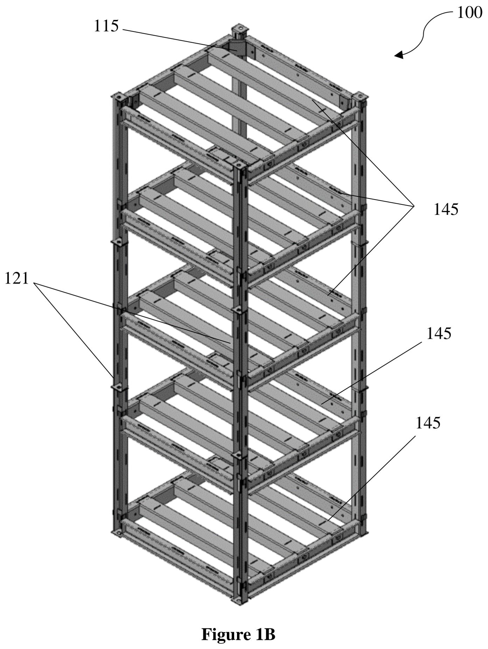

**Figure 1A** and **Figure 1B** illustrate isometric views of a first example of the flat-pack battery cabinet 100 (hereinafter referred to as the cabinet 100) in accordance with the example of the present disclosure.

In an example, the cabinet 100 may include a plurality of side brackets 105, a plurality of slats 110, a plurality of support brackets 115, and a plurality of lock brackets 120. The cabinet 100 may further include a plurality of vertical members 121.

In an example, each side bracket 105 may be defined by a long rectangular body 107 having a pair of flanges 130 extending from either longitudinal edge thereof. In another example, a plurality of holes 125A, 125B and grooves 140 may be configured in the body. In another example, a plurality of slits 135 may be provided in the flanges 130. In another example, the side brackets 105 may be configured to be attached with each other to form a frame 145 of a shelf of the cabinet.

In an example, the support brackets 115 may be defined by a plate having a pair of extensions 116 configured to extend from operative edges thereof. In an example, the support brackets 115 may be configured to allow mounting of objects such as batteries thereon, in an assembled configuration of the cabinet 100.

In another example, a plurality of fastening holes 116A may be configured in opposite extensions 116, complementary to the first holes 125A. In another example, the side brackets 105 may be attached with each other with the help of the support brackets 115 by means of fasteners that are received in the first holes 125A and the fastening holes 116A.

In one example, the lock brackets 120 may have a U-shaped configuration.

The lock brackets 120 may be configured to be attached to the side brackets 105 at operative corners of the frame 145. The lock brackets 120 may be configured to receive the vertical members 121 between its arms, and act as locking notches during the assembly of the cabinet 100.

In one example, before installation, the lock bracket 120 may have an L-shaped configuration. Once the lock bracket 120 is mounted on the side bracket 105, the straighter end of the lock bracket 120 may be hammered to give the lock bracket 120, a U-shaped configuration.

In another example, the slat 110 may be defined by a U-shaped rectangular body having a pair of arms 112 extending from lateral edges of the body.

In another example, a pair of overhangs 114 may be configured to extend from the longitudinal edges of the body to define a gap 133 between the operative edges of the overhangs 114 and the operative edges of the arms 112. In another example, the slat 110 may include a plurality of notches 127 configured in the body. In a further example, a plurality of apertures 126 may be configured in the arms 112, complementary to the holes 125B.

In an example, the slats 110 may be configured to be mounted on a pair of diagonally opposite side brackets 105, such that the arms 112 of each slat 110 are received in the slits 135 of the side bracket 105, while the overhangs 114 respectively rest against the edges of the side bracket 105. In another example, fasteners 128 may be received in the apertures 126 via the holes 125. The configuration of the flat pack cabinet 100 may thus facilitate ease of assembly and disassembly.

In another example, a plurality of frames 145 is configured to define a plurality of shelves that are connected to each other by means of the vertical members 121.

Figure 1A and Figure **1B** illustrate the assembly configuration of a 3X level or 3 tier cabinet in one implementation. In a non-limiting example, the configuration of the cabinet structure 100 of the present disclosure enables flexibility for packaging and assembly, reducing the assembly time to less than 25 minutes or lesser for a 3X level cabinet. This efficiency is achieved by packaging individual components in smaller boxes, streamlining logistics and reducing the cost for customers when a smaller size cabinet structure is needed as the configuration comprises of similar parts.

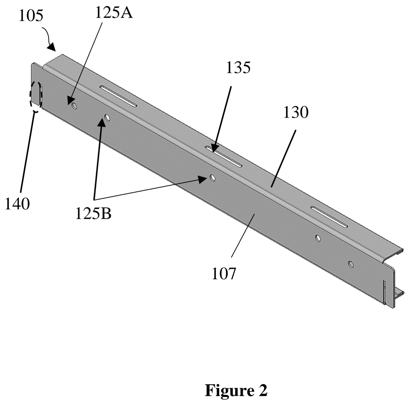

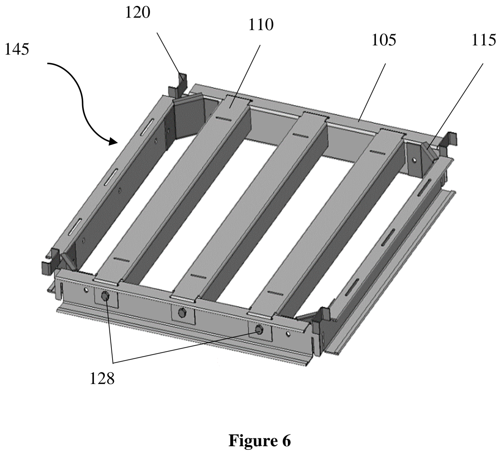

**Figure 2** illustrates an isometric view of a side bracket of the flat-pack battery cabinet of Figure 1A in accordance with the example of the present disclosure. In an example, the cabinet 100 may be provided with a plurality of frames, each frame 145 comprising a plurality of side brackets 105. The side bracket 105 may be characterized by a long rectangular body and may be provided with flanges 130. The flanges 130 are provided to enhance stability to the cabinet structure. The flanges 130 may be provided with holes 125A, 125B and grooves 140 to allow for easy alignment and secure fastening with other components of the cabinet 100. The flanges 130 may be provided with slits 135 to enable quick insertion of slats 110, simplifying the assembly process. The slit 135 may be configured to receive the slat 110 to form the frame 145 of Figure 6 (explained below).

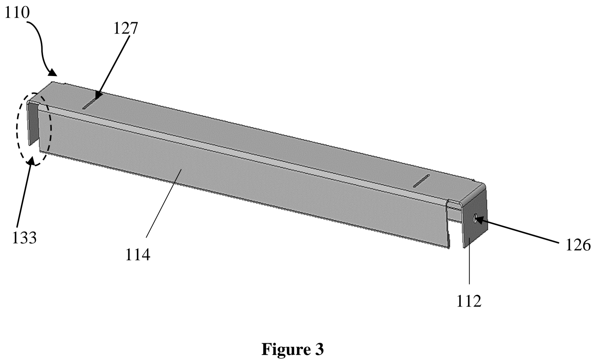

**Figure 3** illustrates an isometric view of a slat of the flat-pack battery cabinet of Figure 1A in accordance with the example of the present disclosure. In an example, the cabinet 100 may be provided with a plurality of frames, each frame 145 comprising a plurality of side slats 110. The slats 110 may be configured to be mounted on a pair of diagonally opposite side brackets 105, such that the arms 112 of each slat 110 are received in the slits 135 of the side bracket 105. In an example, each slat 110 may have a U-shaped rectangular body and may comprise a pair of arms 112 extending from lateral edges and overhangs 114 extending from longitudinal edges, thereby defining a gap 133 between edges of the overhangs 114 and edges of the arms 112. The slat 110 may be provided with a plurality of notches 127 and apertures 126 in the arms 112, wherein the apertures 126 are complementary to the holes 125B on the side brackets 105.

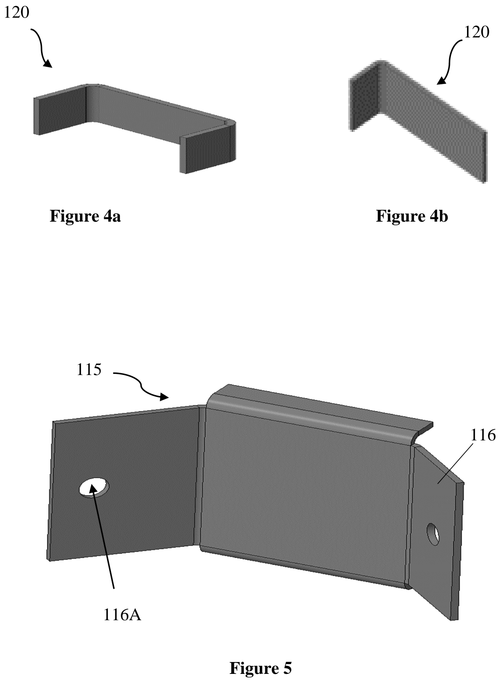

**Figure 4A** illustrates an isometric view of a lock bracket of the flat-pack battery cabinet of Figure 1A in accordance with the example of the present disclosure. In an example, the cabinet 100 may comprise a plurality of frames. Each frame 145 of the cabinet may be provided with a plurality of lock brackets 120. The lock bracket 120 may be configured to be attached to the side brackets 105 (shown in Figure 2) at operative corners of the frame 145. The lock bracket 120 may be configured to receive the vertical members 121 between its arms, and act as locking notches during the assembly of the cabinet 100. In one example, the lock brackets 120 may have a U-shaped configuration.

In an example, the U-shaped lock brackets 120 can secure vertical members 121 in place during assembly, defining notches that can stabilize the structure at the corners of the frame 145, while also simplifying disassembly by providing clear separation points.

**Figure 4B** illustrates an isometric view of the lock bracket of Figure 4A, in its unformed configuration, in accordance with the example of the present disclosure. In an example, before installation, the lock bracket 120 has an L-shaped configuration (as shown in Figure 4b). Once the lock bracket 120 is mounted on the side bracket 105 (as shown in Figure 2), the straighter end of the lock bracket 120 is hammered to give the lock bracket 120 its final U-shaped configuration (as shown in Figure 4a).

**Figure 5** illustrates an isometric view of a support bracket of the cabinet of Figure 1A in accordance with the example of the present disclosure. In an example, the cabinet may be provided with a plurality of frames, each frame comprising a plurality of support brackets. The support bracket 115 is defined by a plate and may be provided with a pair of extensions 116. Each extension 116 may be provided with fastening holes 116A which may align with the holes in the side brackets 105 (as shown in Figure 2). This configuration allows for straightforward attachment using fasteners.

**Figure 6** illustrates an isometric view of a fully assembled shelf of the flat-pack battery cabinet of Figure 1A in accordance with the example of the present disclosure. In an example, the shelf of the cabinet is assembled by using a plurality of side brackets 105, a plurality of slats 110, a plurality of support brackets 115, and a plurality of lock brackets 120 as explained in figures 1A through 5. In an example, each side bracket 105 defined by a long rectangular body 107 has a pair of flanges 130 extending from either longitudinal edge thereof. In another example, a plurality of holes 125A, 125B and grooves 140 may be configured in the body. In another example, each support bracket is defined by a plate with a pair of extensions 116 extending from opposite operative edges, each extension 116 comprising fastening holes 116A complementary to the holes 125A of the side brackets 105. In an example, the slats 110 are secured to the side brackets 105 with fasteners 128 received in the apertures 126 and corresponding holes 125B. The side brackets 105 may be configured to be attached with each other with support brackets 115 by fasteners received in the holes 125A and the fastening holes 116A to form a frame 145 of a shelf of the cabinet.

In one example, the lock brackets 120 may have a U-shaped configuration. The lock brackets 120 may be configured to be attached to the side brackets 105 at operative corners of the frame 145. The lock brackets 120 are configured to receive the vertical members 121 between its arms, and act as locking notches during the assembly of the cabinet 100.

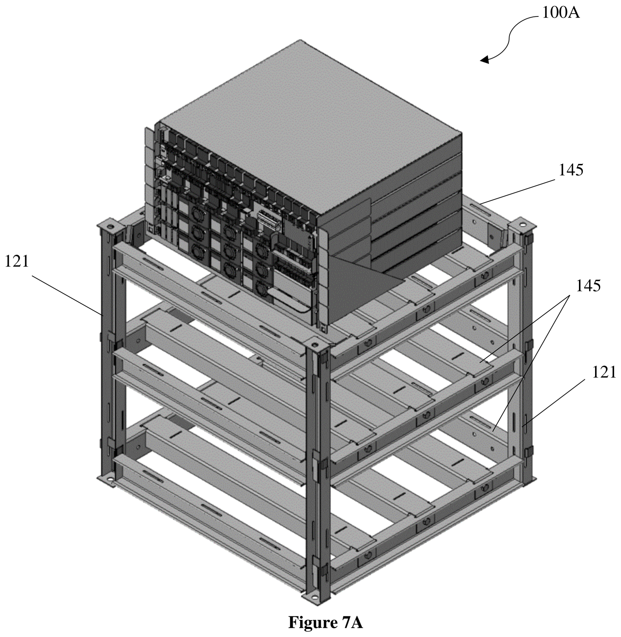

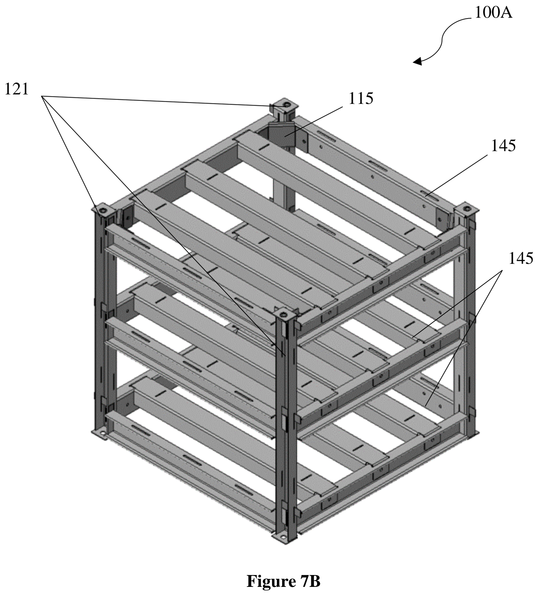

**Figure 7A** **and** **Figure 7B** illustrate isometric view of a second example of the cabinet 100A in accordance with the example of the present disclosure. According to an implementation, figure 7A and figure 7B illustrate a 1X level or 1 tier cabinet 100A assembled by utilizing the components of the cabinet as discussed above.

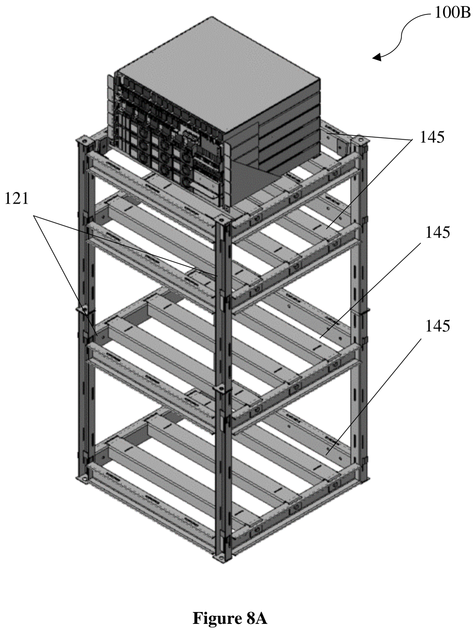

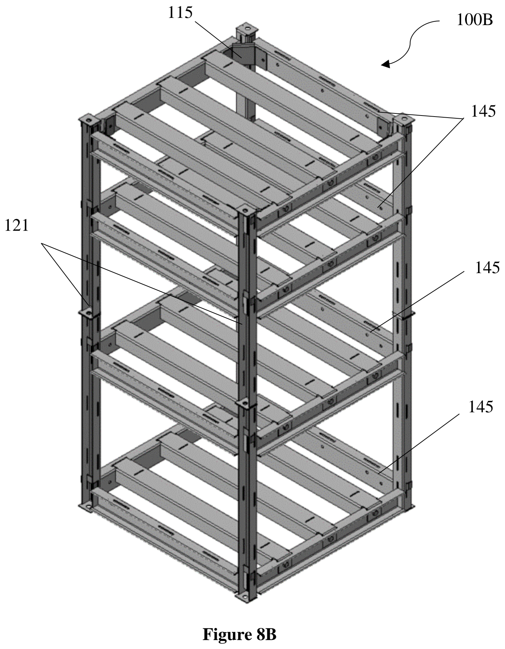

**Figure 8A** **and** **Figure 8B** illustrate isometric view of a third example of the cabinet 100B in accordance with the example of the present disclosure. According to an implementation, figure 8A and figure 8B illustrate a 2X level or 2 tier cabinet 100B assembled by utilizing the components of the cabinet as discussed above.

Thus, the present disclosure overcomes the limitations of conventional assembling process of battery cabinets by providing a modular construction that not only provides flexibility in configuration but also reduces errors during assembly, making it user-friendly for both DIY enthusiasts and professionals alike. Overall, the configuration of the cabinet structure is such that, once assembled, the cabinet remains stable and secure, minimizing wobbling or shifting over time.

The methods, systems, devices, graphs, and/or tables discussed herein are examples. Various examples may omit, substitute, or add various procedures or components as appropriate. For instance, in alternative examples, the methods may be performed in an order different from that described, and/or various stages may be added, omitted, and/or combined. Also, features described with respect to certain examples may be combined in various other examples. Different aspects and elements of the examples may be combined in a similar manner. Also, technology evolves and, thus, many of the elements are examples and do not limit the scope of the disclosure or claims. Additionally, the techniques discussed herein may provide differing results with different types of context awareness classifiers.

Unless defined otherwise, all technical and scientific terms used herein have the same meaning as commonly or conventionally understood. As used herein, the articles "a" and "an" refer to one or to more than one (i.e., to at least one) of the grammatical object of the article. By way of example, "an element" means one element or more than one element. "About" and/or "approximately" as used herein when referring to a measurable value such as an amount, a temporal duration, and the like, encompasses variations of +20% or +10%, +5%, or +0.1% from the specified value, as such variations are appropriate to in the context of the systems, devices, circuits, methods, and other implementations described herein. "Substantially" as used herein when referring to a measurable value such as an amount, a temporal duration, a physical attribute (such as frequency), and the like, also encompasses variations of ±20% or ±10%, ±5%, or ±0.1% from the specified value, as such variations are appropriate to in the context of the systems, devices, circuits, methods, and other implementations described herein.

As used herein, including in the claims, "and" as used in a list of items prefaced by "at least one of" or "one or more of" indicates that any combination of the listed items may be used. For example, a list of "at least one of A, B, and C" includes any of the combinations A or B or C or AB or AC or BC and/or ABC (i.e., A and B and C). Furthermore, to the extent more than one occurrence or use of the items A, B, or C is possible, multiple uses of A, B, and/or C may form part of the contemplated combinations. For example, a list of "at least one of A, B, and C" may also include AA, AAB, AAA, BB, etc.

While illustrative and presently preferred examples of the disclosed systems, methods, and/or machine-readable media have been described in detail herein, it is to be understood that the inventive concepts may be otherwise variously embodied and employed, and that the appended claims are intended to be construed to include such variations, except as limited by the prior art. While the principles of the disclosure have been described above in connection with specific apparatuses and methods, it is to be clearly understood that this description is made only by way of example and not as limitation on the scope of the disclosure.

Described herein are also the following items:
1. A flat-pack battery cabinet (100) comprising:
   a plurality of frames connected to each other by a plurality of vertical members (121), wherein each frame of the plurality of frames comprising:
   a plurality of side brackets (105), each side bracket (105) having a rectangular body (107) with a pair of flanges (130) extending from opposite longitudinal edges of the body (107), the body (107) further defining a plurality of holes (125A, 125B) and grooves (140) configured therein, and a plurality of slits (135) configured in the flanges (130);
   a plurality of slats (110) connected to a pair of opposing side brackets (105), each slat (110) comprising a U-shaped rectangular body having a pair of arms (112) extending from lateral edges and overhangs (114) extending from longitudinal edges, thereby defining a gap (133) between edges of the overhangs (114) and edges of the arms (112), the slat (110) further defining a plurality of notches (127) and apertures (126) in the arms (112), wherein the apertures (126) are complementary to the holes (125B) on the side brackets (105);
   a plurality of support brackets (115), each support bracket (115) defined by a plate with a pair of extensions (116) extending from opposite operative edges, each extension (116) comprising fastening holes (116A) complementary to the holes (125A) of the side brackets (105); and
   a plurality of lock brackets (120) configured in a U-shaped configuration and attachable to the side brackets (105) at operative corners to form the frame (145), wherein each lock bracket (120) is configured to receive the vertical members (121) between its folds to provide locking during assembly of the cabinet (100).
2. The flat-pack cabinet (100) according to clause 1, wherein the side brackets (105) are configured to be attached to each other with the support brackets (115) by fasteners received in the holes (125A) and the fastening holes (116A), forming the frame (145) of a shelf.
3. The flat-pack cabinet (100) according to any preceding clause, wherein the slats (110) are mounted on a pair of diagonally opposite side brackets (105) such that the arms (112) of each slat (110) are received in the slits (135) of the side brackets (105), and the overhangs (114) rest against the edges of the side brackets (105).
4. The flat-pack cabinet (100) according to clause 3, wherein the slats (110) are secured to the side brackets (105) with fasteners (128) received in the apertures (126) and corresponding holes (125B).
5. The flat-pack cabinet (100) according to any preceding clause, further comprising a plurality of frames (145) each configured to form a shelf, wherein the plurality of frames (145) is connected to each other by the vertical members (121) to define the cabinet structure.
6. The flat-pack cabinet (100) according to any preceding clause, wherein the slits (135) in the flanges (130) of the side brackets (105) are configured to receive the arms (112) of the slats (110) for secure placement of the slats (110) within the frame (145).
7. The flat-pack cabinet (100) according to any preceding clause, wherein the cabinet (100) is assembled by aligning and interlocking the side brackets (105), support brackets (115), and lock brackets (120) to form a modular and detachable frame (145) of the cabinet.
Described herein is also the following item:
1. A flat-pack cabinet (100) comprising:
   multiple frames connected to each other by multiple vertical members (121), wherein each frame of the multiple frames comprising:
   multiple side brackets (105), each side bracket (105) having a rectangular body (107) with a pair of flanges (130) extending from opposite longitudinal edges of the body (107), the body (107) further defining multiple holes (125A, 125B) and grooves (140) configured therein, and multiple slits (135) configured in the flanges (130);
   multiple slats (110) connected to a pair of opposing side brackets (105), each slat (110) comprising a U-shaped rectangular body having a pair of arms (112) extending from lateral edges and overhangs (114) extending from longitudinal edges, thereby defining a gap (133) between edges of the overhangs (114) and edges of the arms (112), the slat (110) further defining a plurality of notches (127) and apertures (126) in the arms (112), wherein the apertures (126) are complementary to the holes (125B) on the side brackets (105);
   multiple support brackets (115), each support bracket (115) defined by a plate with a pair of extensions (116) extending from opposite operative edges, each extension (116) comprising fastening holes (116A) complementary to the holes (125A) of the side brackets (105); and
   multiple lock brackets (120) configured in a U-shaped configuration and attachable to the side brackets (105) at operative corners to form the frame (145), wherein each lock bracket (120) is configured to receive the vertical members (121) between its folds to provide locking during assembly of the cabinet (100).

## Claims

1. A flat-pack cabinet (100) comprising:
a plurality of frames connected to each other by a plurality of vertical members (121), wherein each frame of the plurality of frames comprising:
a plurality of side brackets (105), each side bracket (105) having a rectangular body (107) with a pair of flanges (130) extending from opposite longitudinal edges of the body (107), the body (107) further defining a plurality of holes (125A, 125B) and grooves (140) configured therein, and a plurality of slits (135) configured in the flanges (130);
a plurality of slats (110) connected to a pair of opposing side brackets (105), each slat (110) comprising a U-shaped rectangular body having a pair of arms (112) extending from lateral edges and overhangs (114) extending from longitudinal edges, thereby defining a gap (133) between edges of the overhangs (114) and edges of the arms (112), the slat (110) further defining a plurality of notches (127) and apertures (126) in the arms (112), wherein the apertures (126) are complementary to the holes (125B) on the side brackets (105);
a plurality of support brackets (115), each support bracket (115) defined by a plate with a pair of extensions (116) extending from opposite operative edges, each extension (116) comprising fastening holes (116A) complementary to the holes (125A) of the side brackets (105); and
a plurality of lock brackets (120) configured in a U-shaped configuration and attachable to the side brackets (105) at operative corners to form the frame (145), wherein each lock bracket (120) is configured to receive the vertical members (121) to provide locking during assembly of the cabinet (100).

2. The flat-pack cabinet (100) as claimed in claim 1, wherein the side brackets (105) are configured to be attached to each other with the support brackets (115) by fasteners received in the holes (125A) and the fastening holes (116A), forming the frame (145) of a shelf.

3. The flat-pack cabinet (100) according to any preceding claim, wherein the slats (110) are mounted on a pair of diagonally opposite side brackets (105) such that the arms (112) of each slat (110) are received in the slits (135) of the side brackets (105), and the overhangs (114) rest against the edges of the side brackets (105).

4. The flat-pack cabinet (100) as claimed in claim 3, wherein the slats (110) are secured to the side brackets (105) with fasteners (128) received in the apertures (126) and corresponding holes (125B).

5. The flat-pack cabinet (100) according to any preceding claim, further comprising a plurality of frames (145) each configured to form a shelf, wherein the plurality of frames (145) is connected to each other by the vertical members (121).

6. The flat-pack cabinet (100) according to any preceding claim, wherein the slits (135) in the flanges (130) of the side brackets (105) are configured to receive the arms (112) of the slats (110) for securing the slats (110) within the frame (145).

7. The flat-pack cabinet (100) according to any preceding claim, wherein the cabinet (100) is assembled by aligning the side brackets (105), support brackets (115), and lock brackets (120).
